# EUROPÄISCHE PATENTSCHRIFT

(11) **EP 1 260 040 B1**
(45) Veröffentlichungstag und Bekanntmachung des Hinweises auf die Patenterteilung: **20.12.2006**
(21) Anmeldenummer: 01911443.8
(22) Anmeldetag: 12.02.2001
(51) Int. Cl.: H04B 10/17, H04B 10/08

(54) **VERFAHREN ZUR ÜBERTRAGUNG VON ZUSÄTZLICHEN OPTISCHEN SIGNALEN IM S-BAND**
METHOD FOR TRANSMITTING ADDITIONAL OPTICAL SIGNALS IN THE S-BAND
PROCEDE DE TRANSMISSION DE SIGNAUX OPTIQUES ADDITIONNELS DANS LA BANDE-S

(30) Priorität: 02.03.2000 DE 10010237
(43) Veröffentlichungstag der Anmeldung: 27.11.2002
(73) Patentinhaber: SIEMENS AKTIENGESELLSCHAFT, 80333 München (DE)
(72) Erfinder: KRUMMRICH, Peter, 81379 München (DE)
(86) Internationale Anmeldenummer: PCT/DE2001/000525
(87) Internationale Veröffentlichungsnummer: WO 2001/065737

(56) Entgegenhaltungen:
- WO-A-99/49580
- KANI J ET AL: "Wideband and flat-gain optical amplification from 1460 to 1510 nm by serial combination of a thulium-doped fluoride fibre amplifier and fibre Raman amplifier" ELECTRONICS LETTERS,IEE STEVENAGE,GB, Bd. 35, Nr. 12, 10. Juni 1999 (1999-06-10), Seiten 1004-1006, XP006012288 ISSN: 0013-5194
- KANI J ET AL: "TRIPLE-WAVELENGTH-BAND WDM TRANSMISSION OVER CASCADED DISPERSION-SHIFTED FIBERS" IEEE PHOTONICS TECHNOLOGY LETTERS,IEEE INC. NEW YORK,US, Bd. 11, Nr. 11, November 1999 (1999-11), Seiten 1506-1508, XP000893803 ISSN: 1041-1135
- KANI J ET AL: "Interwavelength-band nonlinear interactions and their suppression in multiwavelength-band WDM transmission systems" JOURNAL OF LIGHTWAVE TECHNOLOGY, NOV. 1999, IEEE, USA, Bd. 17, Nr. 11, Seiten 2249-2260, XP002171551 ISSN: 0733-8724
- KANI J ET AL: "Trinal-wavelength-band WDM transmission over dispersion-shifted fibre" ELECTRONICS LETTERS,IEE STEVENAGE,GB, Bd. 35, Nr. 4, 18. Februar 1999 (1999-02-18), Seiten 321-322, XP006011800 ISSN: 0013-5194 in der Anmeldung erwähnt

## Beschreibung

Die Erfindung betrifft ein Verfahren zur Übertragung von optischen Signalen in herkömmlichen Übertragungsbändern und zusätzlichen optischen Signalen im S⁺-Band über eine optische Faser.

Aufgrund des rasanten Wachstums des Internets ist ein ständig steigender Bedarf an leistungsfähiger Übertragungskapazität in der Weitverkehrstechnik, insbesondere in optischen Übertragungssystemen, erkennbar. Hierbei bieten optische Übertragungssysteme, insbesondere nach dem WDM-Prinzip (Wavelength Division Multiplexing) arbeitende Übertragungssysteme, eine Möglichkeit, die über eine optische Faser übertragbare Datenkapazität durch Steigerung der verwendeten WDM-Kanalzahl zusätzlich zu erhöhen. Derzeit werden überwiegend optische Signale im C-Band (Wellenlängenbereich der WDM-Kanäle von ca.1530-1560 mn) übertragen, wobei bereits erste optische Übertragungssysteme für das L-Band (Wellenlängenbereich der WDM-Kanäle von ca. 1570 bis 1605 nm) angekündigt worden sind - herkömmliche Übertragungsbänder. Desweiteren wurde durch die Entwicklung des Thulium-dotierten optischen Verstärkers mit einem nutzbaren Gewinnspektrum im S⁻-Band (Wellenlängenbereich der WDM-Kanäle von ca. 1450 bis 1510 nm) eine zusätzliche Übertragung von weiteren optischen WDM-Kanälen im S⁺-Band ermöglicht, wodurch eine zusätzliche Steigerung der optischen Übertragungskapazität realisiert werden kann.

In bestehenden und zukünftigen optischen WDM-Übertragungssystemen werden optische Signale bzw. Übertragungssignale hauptsächlich im C-Band übertragen. Im Zuge einer Erweiterung bereits installierter C-Band-Übertragungssysteme wäre es insbesondere vorteilhaft, ein bereits bestehendes C-Band-Übertragungssystem für die Übertragung im L- und S⁺-Band zusätzlich zu nutzen. Ein wesentliches Kriterium bei dem Entwurf eines derartigen optischen Übertragungssystems stellt hierbei die optische Streckendämpfung dar. Das spektrale Streckendämpfungsminimum der optischen Faser bzw. Übertragungsfaser, insbesondere einer Silikat-Glasfaser, (ca. 0,19 dB/km) liegt im Wellenlängenbereich um 1550 nm. Sowohl im C-Band als auch im L-Band nimmt die Streckendämpfung von den am weitesten von Streckendämpfungsminimum entfernt liegenden WDM-Kanalwellenlängen um ca. 0,01 dB/km zu. Die im S⁺-Band liegenden kürzeren Wellenlängen weisen aufgrund des starken Anstiegs des Streckendämpfungsverlaufs in der optischen Faser hingegen eine um ca. 0,1 dB/km höhere Streckendämpfung, d.h. eine Streckendämpfung von ca. 0,29 dB/km, als das Minimum der Faserdämpfung im C-Band auf. Das bedeutet, dass im S⁺-Band liegende WDM-Kanäle eine deutlich höhere Streckendämpfung als in den herkömmlichen Übertragungsbändern - C- und L-Band - liegende WDM-Kanäle erfahren.

Desweiteren ist aus der Veröffentlichung "Trinal-wavelengthband WDM transmission over dispersion-shifted fibre" von J.Kani, et al., Electronic Letters, 18. Februar 1999, Vol. 35, No. 4 bekannt, dass durch die stimulierte Raman-Streuung bei hohen Kanalpegeln bzw. Gesamtleistungen der optischen Übertragungssignale eine Zusatzdämpfung der WDM-Kanäle in S⁺-Band verursacht werden kann. Der im S⁺-Band hervorrgerufene stimulierte Raman-Effekt transferiert hierbei Energie von den kürzeren Wellenlängen - S⁺-Band - zu längeren Wellenlängen - C- und L-Band - und hebt hierdurch die Kanalpegel der WDM-Kanäle im C- und L-Band auf Kosten der WDM-Kanäle in S⁺-Band an. Außerdem offenbart WO 9 949 580 einen Ramanverstärker, der im Wellenlängen Bereich von 1117...1240 nm gepumpt wird.

Die höhere Streckendämpfung im S⁺-Band kann prinzipiell durch höhere Kanalpegel am optischen Fasereingang ausgeglichen werden. Hierbei wird allerdings der maximal realisierbare Kanalpegel für die Übertragung der optischen Signale durch die in der optischen Faser entstehenden nichtlinearen Effekte wie beispielsweise Selbstphasenmodulation oder Vierwellenmischung begrenzt. Jedoch können beim Betrieb von optischen Übertragungssystemen im C- und L-Band mit derartig hohen Kanalpegeln die Kanalpegel der im S⁺-Band übertragenen Übertragungskanäle nicht im erforderlichen Maße angehoben werden.

Einen weiteren Ansatz stellt die Verwendung geringerer Kanaldatenraten im S'-Band im Vergleich zum C- und L-Band dar. Bei vergleichbaren Kanalpegeln am Fasereingang weisen die WDM-Kanäle im S⁺-Band aufgrund der höheren Faserdämpfung einen geringeren optischen Signal-Rauschabstand (OSNR) auf. Durch die geringeren Kanaldatenraten im S'-Band können jedoch die bestehenden geringen Signal-Rauschabstände im S'-Band mit Hilfe von optischen Empfängern für niedrige Datenraten ausgewertet werden, wodurch die höhere Streckendämpfung im S⁺-Band tolerierbar wird.

Die der Erfindung zugrunde liegende Aufgabe besteht darin, die Übertragung weiterer WDM-Kanäle in einem bereits bestehenden optischen WDM-Übertragungssystem im S'-Band ohne hohen technischen Aufwand zu realisieren und als weitere Aufgabe, die den erhöhte Faserdämpfung im S'-Band im Vergleich zu dem C- und L-Band auszugleichen. Die Aufgabe wird ausgehend von einem Verfahren gemäß dem Merkmal des Oberbegriffs des Patentanspruches 1 durch die Merkmale des kennzeichnenden Teils gelöst.

Der wesentliche Aspekt des erfindungsgemäßen Verfahrens ist insbesondere darin zu sehen, daß mindestens ein optisches Pumpsignal zur Verstärkung aufgrund des Raman-Effektes der im S'-Band übertragenen zusätzlichen optischen Signale in die optische Faser eingekoppelt wird, wobei die Wellenlänge des mindestens einen optischen Pumpsignals im Wellenlängenbereich von 1320 nm bis 1370 nm liegt. Hierdurch wird besonders vorteilhaft die höhere Streckendämpfung im S⁺-Band mit Hilfe der stimulierten Raman-Streuung in der optischen Übertragungsfaser gezielt ausgeglichen, d.h. insbesondere die im S⁺-Band liegenden WDM-Kanäle bzw. die im S⁺-Band zu übertragenden zusätzlichen optischen Signale erfahren eine effektive Verstärkung, jedoch die Kanäle im C- und im L-Band werden nur beschränkt verstärkt. Somit wird durch das erfindungsgemäße Verfahren eine einfaches technisches Verfahren vorgestellt, ein bereits bestehendes optisches WDM-Übertragungssystem für die Übertragung weiterer WDM-Kanäle, insbesondere im S⁺-Band, mit geringen technischen Aufwand hochzurüsten.

Ein weiterer wesentlicher Vorteil des erfindungsgemäßen Verfahrens ist darin zu sehen, daß die Amplitude des mindestens einen optischen Pumpsignals so gewählt ist, daß die Faserdämpfungsunterschiede im C-Band, L-Band und S⁺-Band der optischen Faser nahezu ausgeglichen werden - Anspruch 2. Durch die erfindungsgemäße Wahl der Amplitude des mindestens einen optischen Pumpsignals kann besonders vorteilhaft die höhere Faserdispersion im S⁺-Band soweit kompensiert werden bis diese annähernd der Faserdispersion im C-Band und L-Band der optischen Faser entspricht.

Ein weiterer Vorteil des erfindungsgemäßen Verfahrens ist darin zu sehen, daß mindestens zwei optische Pumpsignale mit unterschiedlicher Wellenlänge und/oder Lichtleistung in das optische Übertragungsmedium zur Anpassung der Pegel der verstärkten optischen Signale an einen vorgegebenen Amplitudenverlauf eingekoppelt werden - Anspruch 3. Durch die erfindungsgemäße Abstimmung der Pumpwellenlänge und der Pumpleistung der optischen Pumpsignale können die Pegel der im S⁺-Band übertragenen zusätzlichen optischen Signale derartig verstärkt werden, daß die Pegel der zusätzlichen optischen Signale nach der Übertragung im S⁺-Band einen vorgegebenen Amplitudenverlauf aufweisen, wodurch das im S⁺-Band vorliegende Streckendämpfungssprektrum nahezu vollständig kompensiert werden kann.

Zusätzlich wird erfindungsgemäß das mindestens eine optische Pumpsignal kontradirektional zu den verstärkenden zusätzlichen optischen Signalen in das optische Übertragungsmedium eingekoppelt - Anspruch 4. Desweiteren kann das optische Pumpsignal mit einem Datensignal zur Realisierung eines Überwachungskanals moduliert werden - Anspruch 5, wobei hierbei die Modulationsfrequenz größer als 10 kHz gewählt wird - Anspruch 6. Um ein störendes Überkoppeln zwischen dem Intensitätsrauschen der optischen Pumpsignale und der optischen Signale bzw. Übertragungssignale in dem für die Übertragung genutzten Frequenzbereich zu reduzieren bzw. zu vermeiden, wird erfindungsgemäß das mindestens eine optische Pumpsignal kontradirektional zu den verstärkenden zusätzlichen optischen Signalen in die optische Faser eingekoppelt, d.h. das S⁺-Band der optischen Übertragungsstrecke wird kontrodirektional gepumpt. Eine derartige kontradirektionale Pumpkonfiguration resultiert in einer Tiefpaßcharakteristik mit einer Grenzfrequenz von ca. 10 kHz, d.h. durch das kontradirektionale Pumpen weisen die optischen Pumpsignale eine ähnliche Signalverzerrung auf wie bei einer Tiefpaßfilterung mit einem eine Grenzfrequenz von ca. 10 kHz aufweisenden Tiefpaßfilter. Dieser Effekt kann zur Realisierung von weiteren Übertragungskanälen ausgenutzt werden, indem mit Hilfe eines deutlich oberhalb der Grenzfrequenz von ca. 10 kHz modulierten Pumpsignals zusätzliche Daten bzw. Datensignale übertragen werden.

Die Erfindung wird im folgenden anhand eines Blockschaltbildes näher erläutert.

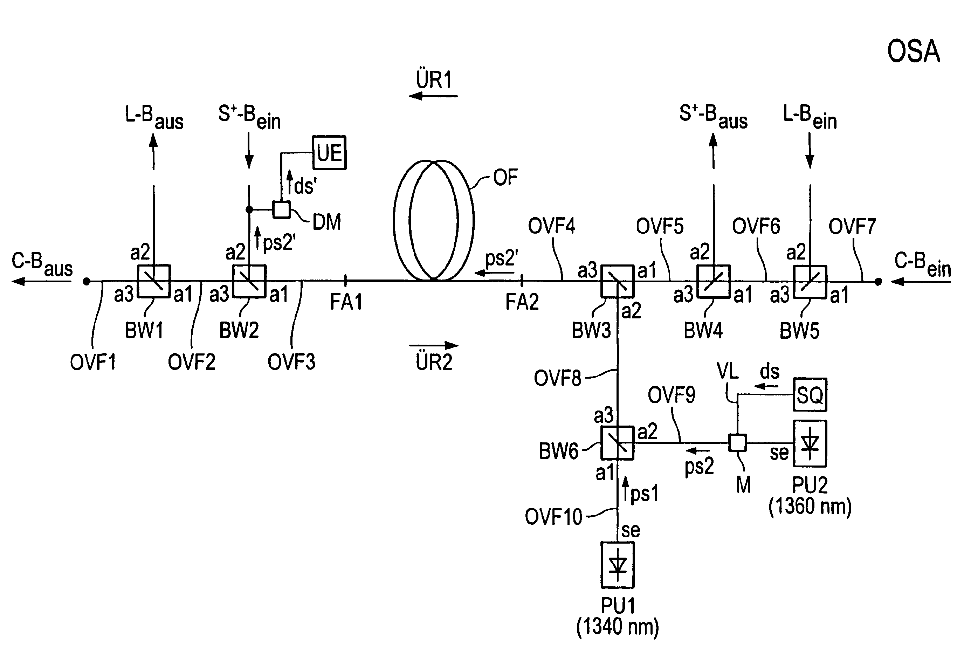

In Figur 1 ist beispielsweise eine Konfiguration eines optischen Streckenabschnittes OSA dargestellt, wobei durch den optischen Streckenabschnitt OSA ein Teil eines WDM-Übertragungssystems repräsentiert wird, über den eine Datenübertragung im C-, L- und S⁺-Band, d.h. in den durch die jeweiligen Bändern repräsentierten WDM-Kanälen, realisierbar ist. Der in Figur 1 dargestellte optische Streckenabschnitt OSA weist eine optische Übertragungsfaser OF mit einem ersten Faseranschluß FA1 und einem zweiten Faseranschluß FA2 auf. Desweiteren sind eine erste bis sechste Bandweiche BW1 bis BW6 mit jeweils einem ersten, zweiten und dritten Anschluß a1, a2, a3 vorgesehen, über die optische Übertragungssignale bzw. Signale OS ein oder ausgekoppelt werden können. Die Anschlüsse a1 bis a3 der optischen Bandweichen BW1 bis BW6 sind über erste bis zehnte optische Verbindungsfaser OVF1 bis OVF10 verbunden. Zur Erzeugung von optischen Pumpsignalen ps1,ps2 sind eine erste optische Pumpeinheit PU1 und eine zweite optische Pumpeinheit PU2 bei dem in Figur 1 dargestellten optischen Streckenabschnitt OSA vorgesehen.

Die erste optische Verbindungsfaser OVF1 ist an den dritten Anschluß a3 der ersten optischen Bandweiche BW1 angeschlossen und der erste Anschluß a1 der optischen Bandweiche BW1 ist über die zweite optische Verbindungsfaser OVF2 an den dritten Anschluß a3 der zweiten optischen Bandweiche BW2 geführt. Desweiteren ist der erste Anschluß a1 der zweiten optischen Bandweiche BW2 über die dritte optische Verbindungsfaser OVF3 mit dem ersten Faseranschluß FA1 der optischen Faser OF bzw. Übertragungsfaser OF verbunden. Der zweite Faseranschluß FA2 der optischen Faser OF ist über die vierte optische Verbindungsfaser OVF4 an den dritten Anschluß a3 der dritten optischen Bandweiche BW3 geführt sowie der zweite Anschluß a2 der dritten optischen Bandweiche BW3 über eine achte optische Verbindungsfaser OVF8 an den dritten Anschluß a3 der sechsten optischen Bandweiche BW6 angeschlossen. Der erste Anschluß a1 der dritten optischen Bandweiche BW3 ist über die fünfte optische Verbindungsfaser OVF5 mit dem dritten Anschluß a3 der vierten optischen Bandweiche BW4 verbunden, an dessen ersten Anschluß a1 über die sechste optische Verbindungsfaser OVF6 der dritte Anschluß a3 der fünften optischen Bandweiche BW5 angeschlossen ist. Der erste Anschluß a1 der fünften optischen Bandweiche BW5 ist schließlich mit der siebten optischen Verbindungsfaser verbunden. Die sechste optische Bandweiche BW6 ist mit der ersten und zweiten optischen Pumpeinheit PU1, PU2 verbunden, wobei insbesondere der erste Anschluß a1 der sechsten optischen BW6 an den Signalausgang se der ersten optischen Pumpeinheit PU1 und der zweite Ausgangsanschluß a2 der sechsten optischen Bandweiche BW6 an den Signalausgang se der zweiten optischen Pumpeinheit PU2 angeschlossen ist.

In dem erfindungsgemäßen optischen WDM-Übertragungssystem werden somit beispielsweise ein optisches C-Band-Signal C-Bₑᵢₙ, ein optisches L-Band-Signal L-Bₑᵢₙ und ein optisches S⁺-Band-Signal S⁺-Bₑᵢₙ übertragen, wobei das optische C-Band-Signal C-Bₑᵢₙ, das optische L-Band-Signal L-Bₑᵢₙ und das optische S⁺-Band-Signal S⁺-Bₑᵢₙ jeweils mehrere WDM-Kanäle enthalten können. Das optische C-Band-Signal C-Bₑᵢₙ wird am Beginn des in Figur 1 dargestellten optischen Streckenabschnitt OSA in die siebte optische Verbindungsfaser OVF7 eingekoppelt. Das optische C-Band-Signal C-Bₑᵢₙ wird von der siebten optischen Verbindungsfaser OVF7 über die fünfte optische Bandweiche BW5 und über die sechste optische Verbindungsfaser OVF6 zur vierten optischen Bandweiche BW4 übertragen. Von der vierten optischen Bandweiche BW4 wird das optische C-Band-Signal C-Bₑᵢₙ über die fünfte optische Verbindungsfaser OFV5 an die dritte optische Bandweiche BW3 weitergeleitet und durch diese über die vierte optische Verbindungsfaser OFV4 an den zweiten Faseranschluß FA2 der optischen Faser OF abgegeben.

Nach der Übertragung des C-Band-Signals C-Bₑᵢₙ über die optische Faser OF wird das optische C-Band-Signal C-Bₑᵢₙ am ersten Faseranschluß FA1 der optischen Faser OF über die dritte optische Verbindungsfaser OVF3 an die zweite optische Bandweiche BW2 abgegeben. Von dieser wird das optische C-Band-Signal C-Bₑᵢₙ über die zweite optische Verbindungsfaser OVF2 zur ersten optischen Bandweiche BW1 und schließlich über die erste optische Verbindungsfaser OVF1 zum Ende des in Figur 1 dargestellten optischen Streckenabschnittes OSA übertragen. Am Ausgang bzw. Ende der ersten optischen Verbindungsfaser OFV1 wird somit ein über den optischen Streckenabschnitt OSA übertragenes optisches C-Band-Signal C-Bₐᵤₛ abgegeben.

Zusätzlich zu dem optischen C-Band-Signal C-Bₑᵢₙ wird ein optisches L-Band-Signal L-Bₑᵢₙ übertragen, welches über die fünfte optische Bandweiche BW5 in die sechste optische Verbindungsfaser OVF6 eingekoppelt wird, d.h. das L-Band-Signal L-Bₑᵢₙ wird an den zweiten Anschluß a2 der fünften optischen Bandweiche BW5 geführt und somit in die an den dritten Anschluß a3 der fünften optischen Bandweiche BN5 angeschlossene sechste optische Verbindungsfaser OVF6 eingekoppelt. Das optische L-Band-Signal L-Bₑᵢₙ und das optische C-Band-Signal C-Bein werden über den optischen Streckenabschnitt OSA in einer ersten Übertragungsrichtung ÜR1 übertragen. Somit wird das optische L-Band-Signal L-Bₑᵢₙ über die sechste optische Verbindungsfaser OVF6 an die vierte optische Bandweiche BW4 und schließlich über die sich anschließende fünfte optische Verbindungsfaser OVF5 an die dritte optische Bandweiche BW3 übertragen. Von der dritten optischen Bandweiche BW3 wird das optische L-Band-Signal L-Bₑᵢₙ über die vierte optische Verbindungsfaser OVF4 an den zweiten Faseranschluß FA2 der optischen Faser OF abgegeben, über die optische Faser OF übertragen und am ersten Faseranschluß FA1 der optischen Faser OF über die dritte optische Verbindungsfaser OVF3 der zweiten optischen Bandweiche BW2 zugeführt. Über die am dritten Anschluß a3 der zweiten optischen Bandweiche BW2 angeschlossene zweite optische Verbindungsfaser OVF2 wird das optische L-Band-Signal L-Bₑᵢₙ zum ersten Anschluß a1 der ersten optischen Bandweiche BW1 übertragen, in der das optische L-Band-Signal L-Bₑᵢₙ ausgekoppelt und am zweiten Anschluß a2 abgegeben wird. Das erfindungsgemäß über den optischen Streckenabschnitt OSA übertragene optische L-Band-Signal L-Bₐᵤₛ kann im folgenden - nicht in Figur 1 dargestellt - zur Weiterverarbeitung einer Verarbeitungseinrichtung zugeführt werden.

Im Gegensatz zum optischen L-Band-Signal L-Bₑᵢₙ wird das optische S⁺-Band-Signal S⁺-Bₑᵢₙ in einer zweiten, entgegengesetzt zur ersten Übertragungsrichtung ÜR1 verlaufenden Übertragungsrichtung ÜR2 übertragen, d.h. das optische S⁺-Band-Signal S⁺-Bₑᵢₙ breitet sich entgegengesetzt zum optischen C-Band-Signal C-Bₑᵢₙ und entgegengesetzt zum optischen L-Band-Signal L-Bₑᵢₙ in der optischen Faser OF aus. Das optische S⁺-Band-Signal S⁺-Bₑᵢₙ wird über den zweiten Anschluß a2 der zweiten optischen Bandweiche BW2 in die an den ersten Anschluß a1 der zweiten optischen Bandweiche BW2 angeschlossene dritte optische Verbindungsfaser OVF3 eingekoppelt und an den ersten Faseranschluß FA1 der optischen Faser OF geführt. Im Anschluß an die Übertragung des optischen S⁺-Band-Signals S⁺-Bₑᵢₙ über die optische Faser OF in zweiter Übertragungsrichtung ÜR2 wird das optische S⁺-Band-Signal S⁺-Bₑᵢₙ am zweiten Faseranschluß FA2 abgegeben und über die vierte optische Verbindungsfaser OVF4 der dritten optischen Bandweiche BW3 zugeführt. Von der dritten optischen Bandweiche BW3 wird das S⁺-Band-Signal S⁺-Bₑᵢₙ über die fünfte optische Verbindungsfaser OVF5 dem dritten Anschluß a3 der vierten optischen Bandweiche BW4 zugeführt und in dieser ausgekoppelt sowie am zweiten Anschluß a2 das übertragene optische S⁺-Band-Signal S⁺-Bₐᵤₛ abgegeben. Das mit Hilfe der vierten optischen Bandweiche BW4 ausgekoppelte und über den optischen Streckenabschnitt OSA übertragene optische S⁺-Band-Signal S⁺-Bₐᵤₛ kann zur weiteren Verarbeitung einer weiteren Verarbeitungseinrichtung zugeführt werden - in Figur 1 nicht dargestellt.

Die zur erfindungsgemäßen Verstärkung der im S⁺-Band übertragenen optischen WDM-Kanäle bzw. der optischen S⁺-Band-Signale S⁺-Bₑᵢₙ vorgesehenen Pumpeinheiten PU1, PU2 werden im dargestellten Ausführungsbeispiel wie folgt realisiert. In der ersten optischen Pumpeinheit PU1 wird ein erstes optisches Pumpsignal PS1 mit beispielsweise einer Pumpwellenlänge von 1340 nm erzeugt. In der zweiten optischen Pumpeinheit PU2 wird ein zweites optisches Pumpsignal PS2 mit einer Pumpwellenlänge 1360 nm gebildet, wobei die Pumpwellenlänge erfindungsgemäß aus dem Wellenlängenbereich von 1320 nm bis 1370 nm liegen gewählt werden kann. Hierbei wird die Amplitude des ersten und zweiten optischen Pumpsignals ps1,ps2 so gewählt ist, daß die Faserdämpfungsunterschiede im C-Band, L-Band und S'-Band der optischen Übertragungsfaser OF nahezu ausgeglichen werden. Durch den Einsatz einer ersten und zweiten optischen Pumpeinheit PU1, PU2 wird zusätzlich das sich erfindungsgemäß im S⁺-Band ausbildende Raman-Gewinnspektrum deartig geformt, daß die im optischen S⁺-Band liegende WDM-Kanäle nahezu gleichmäßig verstärkt werden bzw. die verstärkten optischen S⁺-Band-Signale S⁺Bₑᵢₙ einen vorgegebenen Amplitudenverlauf nach ihrer Übertragung über die optische Faser OF aufweisen.

Bei dem in Figur 1 dargestellten Ausführungsbeispiel wird hierzu beispielsweise ein Frequenzunterschied zwischen ersten und zweiten Pumpsignal PS1, PS2 von ca. 20 nm gewählt, um ein an die zu verstärkenden S⁺-Band-Signale S⁺-Bₑᵢₙ angepaßtes Raman-Gewinnspektrum zu realisieren. Das erste Pumpsignal ps1 wird durch die erste optische Pumpeinheit PU1 am Signalausgang se abgegeben und über die zehnte optische Verbindungsfaser OVF10 an den ersten Anschluß a1 der sechsten optischen Bandweiche BW6 übertragen. Analog dazu wird durch die zweite optische Pumpeinheit PU2 das zweite optische Pumpsignal ps2 am Signalausgang se abgegeben und über die neunte optische Verbindungsfaser OVF9 an den zweiten Anschluß a2 der sechsten optischen Bandweiche BW6 geführt. In der sechsten optischen Bandweiche BW6 werden das erste und zweite optische Pumpsignal ps1, ps2 miteinander gekoppelt und gemeinsam an den dritten Anschluß a3 der sechsten optischen Bandweiche BW6 weitergeleitet sowie über die achte optische Verbindungsfaser OVF8 an den zweiten Anschluß a2 der dritten optischen Bandweiche BW3 übertragen. Mit Hilfe der dritten optischen Bandweiche BW3 werden das erste und zweite optische Pumpsignal ps1, ps2 kontradirektional zum optischen S⁺-Bandsignal S⁺-Bₑᵢₙ, d.h. in erster Übertragungsrichtung ÜR1, in die vierte optische Verbindungsfaser OVF4 bzw. in die optische Faser OF eingekoppelt. Somit wird der optische Streckenabschnitt OSA mit Hilfe des ersten und zweiten optischen Pumpsignals ps1, ps2 kontradirektional gepumpt, d.h. die Pegel der im S⁺-Band übertragenen WDM-Kanäle werden kontradirektional zur Ausbreitungsrichtung mit Hilfe des ersten und zweiten optischen Pumpsignals ps1, ps2 angehoben bzw. verstärkt und somit die im S⁺-Band für herkömmliche Silikat-Glasfasern erhöhte Strekkendämpfung verringert.

Eine derartige kontradirektionale Pumpkonfiguration resultiert in einer Tiefpaßcharakteristik mit einer Kopplungsgrenzfrequenz von ca. 10 kHz, da die Wechselwirkungslänge des sich in Gegenrichtung ausbreitenden optischen S⁺-Bandsignals S⁺-Bₑᵢₙ in einer Zeitspanne von ca. 0,1 ms durchlaufen wird.

Durch das kontradirektionale Pumpen der optischen Übertragungsfaser OF wird erfindungsgemäß ein sich im S⁺-Band ausbildendes Raman-Gewinnspektrum hervorgerufen, welches die Streckendämpfung im S⁺-Band effektiv kompensiert bzw. die Pegel der im S⁺-Band übertragenen WDM-Kanäle in der optischen Faser OF verstärkt.

Desweiteren ist aufgrund der durch die kontradirektionale Pumpkonfiguration resultierende Tiefpaßcharakteristik mit einer Kopplungsgrenzfrequenz von ca. 10 kHz eine Modulation des ersten und/oder des zweiten Pumsignales ps1, ps2 mit einem Datensignal ds bei einer Modulationsfrequenz deutlich größer 10 kHz möglich, wodurch beispielsweise ein Überwachungskanal für den optischen Streckenabschnitt OSA realisiert werden könnte. In Figur 1 ist hierzu eine Signalquelle SQ zur Erzeugung eines Datensignales ds vorgesehen, die über eine Verbindungsleitung VL an einen Modulator M, beispielsweise einem Mach-Zehnder-Modulator, angeschlossen ist. Der Modulator M ist zwischen die zweite Pumpeinheit PU2 und der sechsten optischen Bandweiche BW6 in die neunte optische Verbindungsfaser OVF9 eingeschaltet. Das am Signalausgang se der zweiten Pumpeinheit PU2 abgegebene zweite optische Pumpsignal ps2 wird an den Modulator M übertragen und im Modulator M mit dem von der Datensignalquelle SQ erzeugten Datensignal ds moduliert. Das modulierte zweite optische Pumpsignal ps2' wird analog zum zweiten optischen Pumpsignal ps2 über die sechste optische Bandweiche BW6 sowie die dritte optische Bandweiche BW3 in die optische Faser OF eingekoppelt. Nach der Übertragung über die optische Faser OF wird das modulierte zweite optische Pumpsignal ps2' mit Hilfe der zweiten optischen Bandweiche BW2 ausgekoppelt und beispielsweise einem an den zweiten Anschluß a2 angeschlossenen Demodulator DM zugeführt. Mit Hilfe des Demodulators wird das modulierte zweite optische Pumpsignal ps2' demoduliert und das Datensignal ds' zurückgewonnen. Das zurückgewonnen Datensignal ds' wird einer Überwachungseinrichtung UE zum Zwecke der Überwachung des optischen Streckenabschnitts OSA zugeführt sowie in der Überwachungseinrichtung UE ausgewertet.

Zur Modulation eines der beiden optischen Pumpsignale ps1,ps2 kann beispielsweise in ein weiteren Realisierungmöglichkeit das Ansteuersignal einer der beiden Pumpeinheiten PU1,PU2, insbesondere der darin enthaltenen Lasereinheit, bereits mit dem Datensignal ds moduliert werden - nicht in Figur 1 dargestellt.

Desweiteren ist das erfindungsgemäße Verfahren nicht ausschließlich auf eine Übertragung von optischen S⁺-Bandsignalen S⁺-Bₑᵢₙ zusätzlich zu C-Band-Signalen C-Bₑᵢₙ und L-Band-Signalen L-Bₑᵢₙ beschränkt, sondern in einem WDM-Übertragungssystem können gemäß dem erfindungsgemäßen Verfahren auch ausschließlich optische S⁺-Bandsignale S⁺-Bₑᵢₙ übertragen werden.

Die Anwendung des erfindungsgemäßen Verfahrens ist keinesfalls auf WDM-Übertragungssysteme beschränkt, sondern kann für die Realisierung von beliebigen optischen Übertragungstrecken OSA eingesetzt werden.

## Patentansprüche

1. Verfahren zur Übertragung von optischen Signalen (C-Bₑᵢₙ, L-Bₑᵢₙ) in herkömmlichen Übertragungsbändern und zusätzlichen optischen Signalen (S⁺-Bₑᵢₙ) im S⁺-Band über eine optische Faser (OF), wobei
mindestens ein optisches Pumpsignal (ps1,ps2) zur Verstärkung aufgrund des Raman-Effektes der im S⁺-Band übertragenen zusätzlichen optischen Signale (S⁺-Bₑᵢₙ) in die optische Faser (OF) eingekoppelt wird, **dadurch gekennzeichnet, daß** Wellenlänge des mindestens einen optischen Pumpsignals (ps1,ps2) im Wellenlängenbereich von 1320 nm bis 1370 nm liegt.

2. Verfahren nach Anspruch 1,
**dadurch gekennzeichnet,**
**daß** die Amplitude des mindestens einen optischen Pumpsignals (ps1,ps2) so gewählt ist, daß die Faserdämpfungsunterschiede im C-Band, L-Band und S⁺-Band der optischen Faser (OF) nahezu ausgeglichen werden.

3. Verfahren nach Anspruch 1 oder 2,
**dadurch gekennzeichnet,**
**daß** mindestens zwei optische Pumpsignale (ps1,ps2) mit unterschiedlicher Wellenlänge und/oder Lichtleistung in das optische Übertragungsmedium (OF) zur Anpassung der Pegel der verstärkten zusätzlichen optischen Signale (S⁺-Bₑᵢₙ) an einen vorgegebenen Amplitudenverlauf eingekoppelt werden.

4. Verfahren nach einem der Ansprüche 1 bis 3,
**dadurch gekennzeichnet,**
**daß** das mindestens eine optische Pumpsignal (ps1,ps2) kontradirektional zu den verstärkenden zusätzlichen optischen Signalen (S⁺-Bₑᵢₙ) in die optische Faser (OF) eingekoppelt wird.

5. Verfahren nach einem der Ansprüche 1 bis 4,
**dadurch gekennzeichnet,**
**daß** das mindestens eine optische Pumpsignal (ps2) mit einem Datensignal (ds) zur Realisierung eines Überwachungskanals moduliert wird.

6. Verfahren nach Anspruch 5,
**dadurch gekennzeichnet,**
**daß** die Modulationsfrequenz größer als 10 kHz gewählt wird.

## Claims

1. Method for transmitting optical signals (C-Bᵢₙ,L-Bᵢₙ) in conventional transmission bands and additional optical signals (S⁺-Bᵢₙ) in the S⁺ band via an optical fiber (OF), in which at least one optical pump signal (ps1,ps2) is launched into the optical fiber (OF) for the purpose of amplifying the additional optical signals (S⁺-Bᵢₙ) transmitted in the S⁺ band on the basis of the Raman effect, **characterized in that** the wavelength of the at least one optical pump signal (ps1,ps2) being in the wavelength range from 1320 nm to 1370 nm.

2. Method according to claim 1,
**characterized**
**in that** the amplitude of the at least one optical pump signal (ps1,ps2) is chosen such that the fiber attenuation differences in the C band, L band and S⁺ band of the optical fiber (OF) are virtually equalized.

3. Method according to claim 1 or 2,
**characterized**
**in that** at least two optical pump signals (ps1,ps2) having different wavelengths and/or light outputs are launched into the optical transmission medium (OF) for the purpose of matching the levels of the amplified additional optical signals (S⁺-Bᵢₙ) to a prescribed amplitude profile.

4. Method according to one of claims 1 to 3,
**characterized**
**in that** the at least one optical pump signal (ps1,ps2) is launched into the optical fiber (OF) in the opposite direction to the amplified additional optical signals (S⁺-Bᵢₙ).

5. Method according to one of claims 1 to 4,
**characterized**
**in that** the at least one optical pump signal (ps2) is modulated with a data signal (ds) in order to produce a monitoring channel.

6. Method according to claim 5,
**characterized**
**in that** the modulation frequency is chosen to be greater than 10 kHz.

## Revendications

1. Procédé de transmission de signaux optiques (C-Bₑᵢₙ, L-Bₑᵢₙ) dans des bandes de transmission classiques et de signaux optiques additionnels (S⁺-Bₑᵢₙ) dans la bande S⁺ via une fibre optique (OF), au moins un signal optique de pompage (ps1, ps2) étant injecté dans la fibre optique (OF) pour amplifier, sur la base de l'effet Raman, les signaux optiques additionnels transmis dans la bande S⁺ (S⁺-Bₑᵢₙ), **caractérisé en ce que** la longueur d'onde de l'au moins un signal optique de pompage (ps1, ps2) se trouve dans la plage de longueurs d'onde allant de 1320 nm à 1370 nm.

2. Procédé selon la revendication 1, **caractérisé en ce que** l'amplitude de l'au moins un signal optique de pompage (ps1, ps2) est choisie telle que les différences d'affaiblissement de la fibre dans la bande C, la bande L et la bande S⁺ de la fibre optique (OF) sont presque compensées.

3. Procédé selon la revendication 1 ou 2, **caractérisé en ce qu'**au moins deux signaux optiques de pompage (ps1, ps2) avec une longueur d'onde et/ou une puissance de la lumière différentes sont injectés dans le médium de transmission optique (OF) pour l'adaptation des niveaux des signaux optiques additionnels amplifiés (S⁺-Bₑᵢₙ) à un tracé donné de l'amplitude.

4. Procédé selon l'une des revendications 1 à 3, **caractérisé en ce que** l'au moins un signal optique de pompage (ps1, ps2) est injecté dans la fibre optique (OF) dans le sens inverse des signaux optiques additionnels à amplifier (S⁺-Bₑᵢₙ).

5. Procédé selon l'une des revendications 1 à 4, **caractérisé en ce que** l'au moins un signal optique de pompage (ps2) est modulé avec un signal de données (ds) pour réaliser un canal de surveillance.

6. Procédé selon la revendication 5, **caractérisé en ce que** la fréquence de modulation est choisie supérieure à 10 kHz.
